# EUROPEAN PATENT APPLICATION

(11) **EP 1 126 422 A2**
(43) Date of publication of application: **22.08.2001**
(21) Application number: 00117416.8
(22) Date of filing: 11.08.2000
(51) Int. Cl.: G07F 7/10

(54) **Method and devices for the transmission of orders and authorizations, in particular for internet purchases**

(30) Priority: 10.02.2000 IT MI000217
(71) Applicant: BGL E-Commerce Solutions S.r.l., 20100 Milano (IT)
(72) Inventor: Benassati, Stefano, 20135 Milano (IT); Grassi, Marco, 00100 Roma (IT)
(74) Representative: Savi, Alberto

(57) **Abstract**

This invention proposes a method and the relative devices for the transmission of data and authorizations for effecting an economical transaction via an informatic or telematic network, comprising the following phases:
- Accessing a telematic network
- Connecting with a commercial service,
- Telematically consulting a catalog or relative pricelist,
- Entering an order and confirming the amount to be paid,
- Entering the data relating to the purchase order, one's identifying data or those of one's debit card,
- Forwarding said data to the debit card company on the part of the vendor, for a control of the data and the residual credit,
- In case of adequate credit, deducting the import from the card's total value and communicating acceptance to the vendor,
- Eventually confirming the sale and executing the order.

## Description

This invention proposes a method and the relative devices for the transmission of data and authorizations capable of allowing the purchasing of goods and services via a an informatic or telematic network.

In particular, the method allows utilizing prepaid telephone cards for the purchases, and completing the transaction by a telematic network.

The method according to the invention consequently allows effecting purchases without the risk of inadvertently exceeding a predetermined expense limit.

Said method also allows any non-holders of credit cards and/or running bank accounts to effect telematic purchases, and avoids any risks deriving from transmitting one's credit data references on a network.

As known, thanks to the ever more capillary diffusion of the personal computer even within a family environment, the "Internet" phenomenon has witnessed an enormous diffusion.

In effect the persons accessing the network are already counting in the millions throughout the country, and their number is constantly expanding.

This opportunity of telematically accessing a vast volume of data has spawned the de velopment of new selling systems, appropriately based on commercial transactions performed via network.

These technological developments offer both enterprises and private individuals enormous opportunities, while making most commercial transactions easier and faster.

Internet allows accessing the catalog or product of thousands of companies, thus affording the possibility of examining the products' characteristics at leisure, of making a pondered choice, of comparing various offers without leaving one's home, and finally, of also finalizing purchases by entering an order via computer, so as to receive the goods by direct home delivery.

Despite all the advantages offered, however, many are still affected by numerous misgivings about resorting to these sales channels, owing to a number of reasons.

The payments are in effect generally made by credit card, which makes it necessary to inform the selling party of one's personal data as well as of the number and expiration of one's credit card for the intended payment of the purchase.

Because of the risk that these data be read by outsiders, many purchasers are reluctant to communicate their credit card data by a network, due to this system's inherent risks.

Another reason acting as a brake against the diffusion of these sales methods is the fact that most potential purchasers constituting a large portions of computer users accessing the Internet are still underage youngsters, who are consequently unqualified to hold credit cards.

The Internet commerce could obviously find a further avenue of development if problems of this nature could be solved, protecting the purchasers from the risks deriving from their communication of credit card data via the network, and allowing even youngsters to perform commercial transactions in complete safety and without any danger of even inadvertently exceeding any expense limit.

This problem is now solved by this invention, which offers a method and the relative devices for the transmission of data and authorizations, in particular for purchases via the Internet or other informatic network, a method based on effecting payments via a prepaid card, or more generally by a debit card.

Upon confirmation of a telematically entered order, the purchaser informs the seller of a secret code or password pre-assigned to said debit card by the card issuing company, for example an ECIN code (Electronic Commerce Identification Number).

The ECIN code is a univocal code attributed to he user, which can be communicated risk-free via a telematic network, because it does not permit effecting purchases beyond the value of the prepaid debit card.

Said method also proves to be extremely useful even in the case of the prepaid card's loss by theft, as it provides numerous devices which allow preventing the usage of the existing credit on the debit card at the time of the theft.

Since it is possible to make purchases simply by memorizing the card's data and its relative activating codes, once the owner is aware of the theft he will be able to effect purchases up to exhausting the residual credit, thus forestalling the thief and preventing him from exploiting said value.

Alternatively, some functions can be provided to transfer the residual credit to one's bank or postal account and to subsequently use it at will, thus pre-empting the thief's gain and leaving him with an exhausted card.

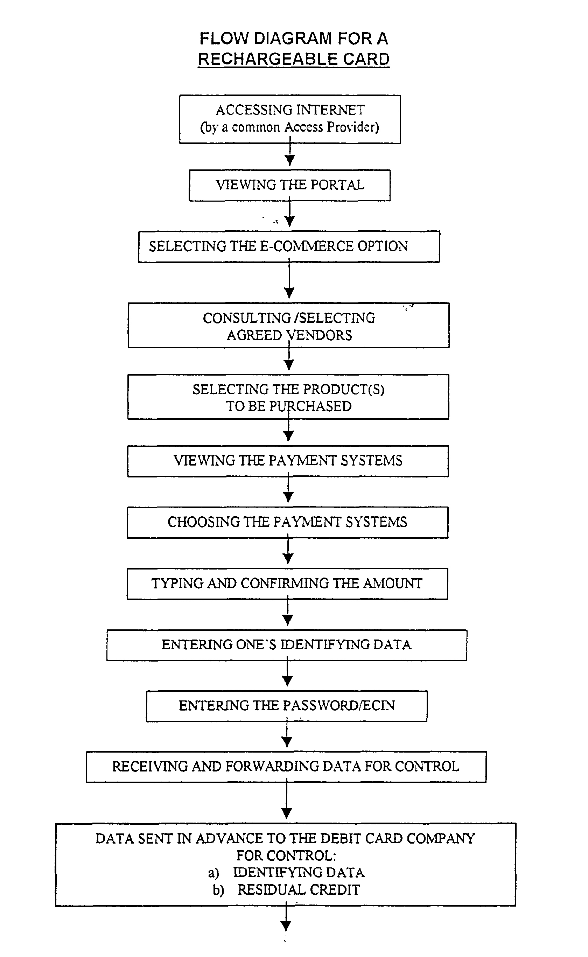

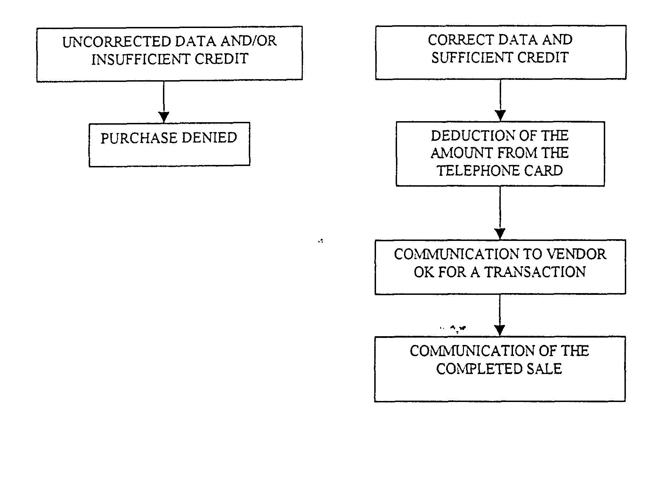

The practicality of the method and of the devices of this invention may be more easily understood from the following detailed description, with reference to the enclosed figure showing a flow diagram of the method of the invention.

In order to effect any purchases via the Internet, the user must have the availability of a prepaid or debited telephone card (amounting in both cases to a debit card), for instance a telephone card of the Smart Card type, used in practically all mobile phones.

In addition to a telephone number, the user must be a holder of an ECIN code (Electronic Commerce Identification Number), assigned to the user by the telephone company, a secret code which can therefore be used as a password.

At the time of the purchase, in lieu of charging the amount due to a credit card (an operation implying the well known risks outlined above), this value will be debited to the user's telephone account, and the telephone company will then complete the transaction with the selling party, in accordance with pre-established means and agreements.

The essential condition for a proper functioning of this procedure is that a prior agreement be established between the telephone company issuing the card and the owner of the electronic commerce activity.

It is in fact necessary that the telephone company be informed by the owner of the

E-commerce site of the value owed by the purchaser to the selling party in real time, so as to make it possible to instantly deduct the amount and prevent the maximum value debitable to the card from exceeding the residual credit, or the specific telephone account from exceeding the agreed limit.

The instantaneous debiting process guarantees both the purchaser, who may thus verify the completion of the transaction, as well as the seller, who may thus verify the economic viability on the card.

All this also safeguards the company issuing the card (the telephone company, in this instance) against any attempts at multiple purchases within a short time period.

Once he's decided the purchase, the purchaser in practice transmits his data to the selling party, along with an identifying code which may coincide with the number of his mobile phone and eventually of a password which may coincide with his ECIN code.

The seller sends the identifying data to the telephone card company, who deducts, if the credit is adequate, the value needed for the purchase and confirms it to the seller, who can thus comfortably confirm the receipt of the order and forward the goods.

More in detail, as may be seen from the enclosed flow diagram, the purchasing process covers the following phases:
- Accessing the Internet via any provider,
- Accessing the seller's site or visualizing a page with the indications of a number of commercial sites for the choice of one's interest,
- Consulting the catalog,
- Choosing the products of one's interest,
- Verifying the cost and accessing a display showing the various modes of payment,
- selecting the preferred payment mode,
- Entering the data and in particular one's mobile phone and ECIN number (E-Commerce Identification Number),
- awaiting the confirmation of the execution of the order on the part of the selling party, who may, at the time of receiving the request, verify the availability of the necessary funds with the telephone company, and deduct an amount befitting the value of the order on hand,
- receiving the confirmation of the order or of an appropriate message outlining the reasons why a given order cannot be fulfilled.

In essence, once a purchaser has identified the product or service of his interest, he selects it in known ways - such as for instance by filling a virtual cart or by inserting a check-off sign in the corresponding window etc., and proceeds with completing the purchasing procedure.

This phase provides for entering one's data and forwarding the goods, along with a code which may be formed by the mobile phone number and an eventual password or ECIN code.

The vendor receives the data and purchasing request and forwards them to the telephone card company to verify the correctness of the identifying data and the import of the residual credit.

If the data are incorrect or the overall cost of the ordered products or services turns out to exceed the amount available, purchasing clearance is denied.

In this case the vendor informs the purchaser of the impossibility of accepting the order, while motivating the reasons on the communication received from the telephone company.

If on the other hand the data are correct and credit is adequate, the telephone company simply deducts the amount in question from the available sum on the debit card, and communicates his approval of the transaction to the vendor.

The telephone company then credits the amount to the vendor while following the rules outlined by the signed agreement and the vendor confirms to the purchaser, always telematically, that the purchase has been completed and that the goods will be sent.

As can be seen from the description outlined above, the method according to the invention affords operating in complete safety, as it allows acting within pre-established limits matching the value of the prepaid card, and practically eliminates the risks involved in forwarding one's bank data via the Internet, plus the fact of allowing minors to perform economical transactions, also of a limited amount, which would otherwise not be possible as said persons cannot be credit card holders based on the existing regulations.

An expert of the trade may provide for numerous variants such as for instance the issuance of a specific prepaid card unconnected with the ownership of a mobile phone or other similar devices, all of which may however be viewed as being covered by this invention.

## Claims

1. A method for effecting an economical transaction by an informatic network, by using a debit card and comprising the following phases:
a) Accessing a telematic network
b) Connecting with a commercial service,
c) Telematically consulting a catalog or relative pricelist,
d) Entering an order and confirming the amount to be paid,
e) Entering the data relating to the purchase order, one's identifying data or those of one's debit card,
f) Forwarding said data to the debit card company on the part of the vendor, for a control of the data and the residual credit,
g) In case of adequate credit, deducting the import from the card's total value and communicating acceptance to the vendor,
h) Eventually confirming the sale and executing the order.

2. A method for effecting an economic transaction according to claim 1, characterized in that said debit card is a prepaid telephone card.

3. A method for effecting an economic transaction according to the foregoing claims, characterized in that said prepaid telephone card is supplied by the telephone company together with a secret code or ECIN (Electronic Commerce Identification Number) that the user may utilize as an activating code for the electronic purchasing service.

4. A method for effecting an economic transaction according to the foregoing claims, characterized in that it provides for a phase in which the debit card company authorizes the vendor to accept the telematic purchase order,

5. A method for effecting an economic transaction according to the foregoing claims, characterized in that it provides for a verification phase in real time, on the part of the debit card company, of the availability of the residual credit,

6. A method for effecting an economic transaction according to one of the foregoing claims from 1 to 4, characterized in that it provides for a phase in which the vendor verifies, after prior authorization by the debit card company, the availability of a residual credit in real time.

7. A method for effecting an economic transaction according to claim 6, in which the operation of telematic purchasing of goods or services is carried out even in the physical absence of the possession of a debit card.

8. A device for effecting an economic transaction by a telematic communication by the method according to any of the foregoing claims, characterized in that it provides for:
a) Means for interconnecting two or more electronic devices capable of allowing a two-way transfer of data,
b) Means for identifying and selecting products and/or services,
c) Means for memorizing an economic credit and authenticating the access to said credit on the part of the holder,
d) Means for verifying the availability of adequate funds for completing the selling and purchasing operation.

9. A device for effecting an economic transaction according to claim 9, characterized in that said connecting means are constituted by a computer linked to a modem, and a device for receiving and/or transmitting by satellite,

10. A device for implementing an economical transaction according to claim 9, characterized in that the means for visualizing the products, the pricelists and/or the catalogs may be constituted by video, vocal and/or multi-frequency operating devices.

11. A device for implementing an economical transaction according to claim 9, characterized in that said means for memorizing an economic credit are alternatively constituted by prepaid magnetic cards, smart cards, bank data and/or prepaid cards.
